# EUROPEAN PATENT APPLICATION

(11) **EP 4 722 513 A1**
(43) Date of publication of application: **08.04.2026**
(21) Application number: 25206145.2
(22) Date of filing: 01.10.2025
(51) Int. Cl.: F02C 6/08, F02C 7/18, F02C 9/18

(54) **TURBINE COOLING AIR THROTTLING VALVE AND SYSTEM FOR HYBRID ELECTRIC ENGINES**

(30) Priority: 01.10.2024 US 202418903184
(71) Applicant: RTX Corporation, Farmington, CT 06032 (US)
(72) Inventor: CLARK, Thomas E., Wells, 04090 (US); AKIN, John, Charlotte, 28205 (US); CHOE, Jung Muk, Glastonbury, 06033 (US)
(74) Representative: Dehns

(57) **Abstract**

A system for providing cooling air within a hybrid electric gas turbine engine (100) includes at least one cooling air tube (128) configured to provide high pressure turbine cooling air from a first location (116) to a second location (120) within the hybrid electric gas turbine engine (100). At least one throttling valve (102) each located on the at least one cooling air tube (128) configured to limit a flow of the high pressure turbine cooling air from the first location to the second location. At least one electromechanical actuator (130) each associated with the at least one throttling valve (102) configured to actuate the throttling valve (102) to a first flow level when the hybrid electric gas turbine engine (100) is in a first condition and to a second flow level when the hybrid electric gas turbine engine (100) is in a second condition responsive to control signals from an external source.

## Description

### TECHNICAL FIELD

This invention relates generally to a turbine air cooling system. More specifically, this invention relates to a system for controlling turbine cooling air extraction from the high-pressure compressor.

### BACKGROUND

Within existing turbine cooling air systems, the system may be sized based upon the maximum flow conditions occurring at takeoff. As a result of basing the turbine cooling air system on the maximum flow conditions at takeoff, the remaining flight phases deliver more cooling air than required to achieve acceptable turbine durability levels at the cost of cycle efficiency from excessive high-pressure compressor bleed air. Thus, there is a need to be able to control the turbine cooling air extraction from the high-pressure compressor at cruising speeds in order to recover cycle efficiency and improve fuel burn.

Existing applications have utilized pneumatic throttling valves that are integrated into the cooling air lines in order to reduce the supply pressure and flow entering the high pressure turbine at cruising speeds. While such systems achieve turbine cooling air modulation and throttling, the usage of pneumatic actuators can present reliability issues. For example, high-pressure compressor discharge air may exceed 600°F (316°C) which can preclude the use of hydraulic, fuel hydraulic, or other working fluids for actuation of the pneumatic throttling valves.

### SUMMARY

According to an aspect of the present invention, there is provided a system for providing cooling air within a hybrid electric gas turbine engine, comprising: at least one cooling air tube configured to provide cooling air from a first location in the hybrid electric gas turbine engine to a second location within the hybrid electric gas turbine engine; at least one throttling valve located on the at least one cooling air tube configured to limit a flow of the cooling air from the first location in the hybrid electric gas turbine engine to the second location within the hybrid electric gas turbine engine, wherein the at least one throttling valve is electromechanically actuated; and at least one electromechanical actuator associated with the at least one throttling valve configured to actuate the throttling valve to a first flow level the cooling air when the hybrid electric gas turbine engine is in a first condition and to a second flow level of the cooling air when the hybrid electric gas turbine engine is in a second condition responsive to control signals from an external source.

Optionally, and in accordance with any of the above, the external source comprises a motor controller for generating the control signals to control operation of the at least one throttling valve to the first flow level and the second flow level of the cooling air responsive to a control signal from full authority digital engine control (FADEC) control.

Optionally, and in accordance with any of the above, the at least one electromechanical actuator is each separately controllable via the control signals from the motor controller.

Optionally, and in accordance with any of the above, the control signals from the motor controller controls the at least one throttling valve to a plurality of positions each providing a different flow level of the cooling air through the at least one cooling air tube.

Optionally, and in accordance with any of the above, the system further comprises a hybrid electric generator configured to provide electricity to the electromechanical actuator.

Optionally, and in accordance with any of the above, the system further comprises at least one second cooling air tube, wherein the at least one second cooling air tube provides a fixed flow of the cooling air therethrough.

Optionally, and in accordance with any of the above, the system further comprises a sensor configured to detect operating conditions of a turbine cooling air system providing the flow of the cooling air and providing closed loop control of the at least one throttling valve responsive thereto.

Optionally, and in accordance with any of the above, the control signals are configured to limit the flow of the cooling air during cruise and low power modes of operation of the hybrid electric gas turbine engine.

According to another aspect of the present invention, there is provided a system for providing cooling air within a hybrid electric gas turbine engine, comprising: a first cooling air tube configured to provide a variable flow of cooling air from a low (or high) pressure compressor in the hybrid electric gas turbine engine to a high pressure turbine within the hybrid electric gas turbine engine; a second cooling tube configured to provide a fixed flow of the cooling air from the low (or high) pressure compressor to the high pressure turbine; a throttling valve located on the first cooling air tube and configured to control the variable flow of the cooling air from the low (or high) pressure compressor to the high pressure turbine, wherein the plurality of throttling valves are electromechanically actuated; an electromechanical actuator associated with the throttling valve configured to actuate the throttling valve to a first flow level when the hybrid electric gas turbine engine is in a first condition and to a second flow level when the hybrid electric gas turbine engine is in a second condition responsive to control signals; and a motor controller for generating the control signals to control operation of the electromechanical actuator to the first flow level and the second flow level of the cooling air responsive to a control signal from full authority digital engine control (FADEC) control.

Optionally, and in accordance with any of the above, the system further comprises:
a third cooling air tube configured to provide a second variable flow of cooling air from the low (or high) pressure compressor in the hybrid electric gas turbine engine to the high pressure turbine within the hybrid electric gas turbine engine; a second throttling valve located on the third cooling air tube and configured to control the second variable flow of the cooling air from the low (or high) pressure compressor to the high pressure turbine, wherein the second throttling valve is electromechanically actuated; a second electromechanical actuator associated with the second throttling valve configured to actuate the second throttling valve to a third flow level when the hybrid electric gas turbine engine is in the first condition and to the fourth flow level when the hybrid electric gas turbine engine is in the second condition responsive to control signals.

Optionally, and in accordance with any of the above, the control signals from the motor controller controls the throttling valve to a plurality of positions each providing a different flow level of the cooling air through an associated first cooling air tube.

Optionally, and in accordance with any of the above, the system further comprises a hybrid electric generator for providing electricity to the electromechanical actuator and the motor controller.

Optionally, and in accordance with any of the above, the system further comprises a sensor for detecting operating conditions of the hybrid electric gas turbine engine providing the flow of the cooling air and providing closed loop control of the throttling valve responsive thereto.

Optionally, and in accordance with any of the above, the control signals limit the flow of the cooling air through the first plurality of cooling air tubes during cruise and low power modes of operation of the hybrid electric gas turbine engine.

Optionally, and in accordance with any of the above, the control signals limit the flow of the cooling air through the cooling air tube or tubes, that is/are configured to provide a variable flow of cooling air (i.e. the first and/or third cooling air tubes), during cruise and low power modes of operation of the hybrid electric gas turbine engine.

According to another aspect of the present invention, there is provided a method for providing cooling air within a hybrid electric gas turbine engine, comprising: providing cooling air from a first location in the hybrid electric gas turbine engine to a second location within the hybrid electric gas turbine engine through at least one cooling air tube, the second location being associated with a high pressure turbine; limiting a flow of the cooling air from the first location in the hybrid electric gas turbine engine to the second location within the hybrid electric gas turbine engine to a first flow level when the hybrid electric gas turbine engine is in a first condition and to a second flow level when the hybrid electric gas turbine engine is in a second condition using at least one electromechanically actuated throttling valve associated with the at least one cooling air tube; and actuating the at least one throttling valve using at least one electromechanical actuator responsive to control signals from an external source.

Optionally, and in accordance with any of the above, the method further comprises generating the control signals to control operation of the at least one throttling valve to limit the flow of the cooling air using a motor controller responsive to a control signal from full authority digital engine control (FADEC) control.

Optionally, and in accordance with any of the above, the step of actuating further comprises separately controlling each of the at least one electromechanical actuator via the control signals from the motor controller.

Optionally, and in accordance with any of the above, the step of limiting further comprises controlling the at least one throttling valve to a plurality of positions each having a different flow level of the cooling air through the at least one cooling air tube.

Optionally, and in accordance with any of the above, the method further comprises providing electricity to the electromechanical actuator using a hybrid electric generator.

Optionally, and in accordance with any of the above, the method further comprises providing a fixed cooling air flow between the first location and the second location using at least one second cooling air tube.

Other technical features may be readily apparent to one skilled in the art from the following figures, descriptions, and claims.

### BRIEF DESCRIPTION OF THE DRAWINGS

For a more complete understanding of this invention and its advantages, reference is now made to the following description taken in conjunction with the accompanying drawings, in which like reference numerals represent like parts:
FIGURE 1 illustrates an example gas turbine engine including an example turbine air cooling system having a high-voltage electromagnetic actuator (EMA) driven turbine cooling air throttling valve;
FIGURE 2 illustrates a block diagram of an example control system for the turbine cooling air system having EMA actuated throttling valves;
FIGURE 3 illustrates a cross-sectional view of an example gas turbine engine having multiple turbine cooling air tubes; and
FIGURE 4 illustrates a cross-sectional view of another example gas turbine engine having multiple turbine cooling air tubes.

### DETAILED DESCRIPTION

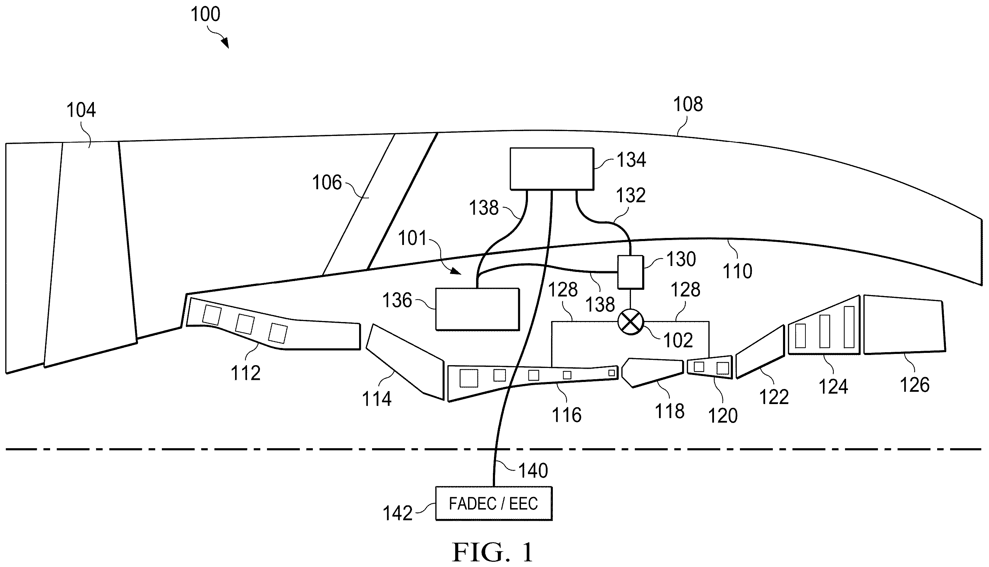

FIGURES 1 through 4, described below, and the various embodiments used to describe the principles of the present invention are by way of illustration only and should not be construed in any way to limit the scope of this invention. Those skilled in the art will understand that the principles of the present invention may be implemented in any type of suitably arranged device or system.

FIGURE 1 illustrates an example gas turbine engine 100 including an example turbine air system 101 having a high-voltage electromagnetic actuator (EMA) driven turbine cooling air throttling valve 102. The turbine air system 101 utilizes the electromechanically actuated throttling valve 102 to control the flow of cooling air from the high-pressure compressor 116 to the high-pressure turbine 120. The hybrid electric gas turbine engine 100 has a rotor fan 104 and the fan exit guide vanes 106 for directing air through the hybrid electric gas turbine engine 100. Cold air that is sucked into the engine nacelle 108 passes through the rotor fan 104 and the fan exit guide vanes 106 between the outer surface of the nacelle 108 and a nacelle inner flow surface 110 as well as passing to the combustion portion of the hybrid electric gas turbine engine 100. The combustion portion of the hybrid electric gas turbine engine 100 consists of the low-pressure compressor 112, compressor frame 114, high-pressure compressor 116, combustion chamber 118, high-pressure turbine 120, turbine frame 122, low-pressure turbine 124 and exhaust frame 126.

As noted previously, the throttling valve 102 may be located with a cooling air tube 128 that provides cooling air between the high-pressure compressor 116 and the high-pressure turbine 120. The throttling valve 102 is electro-mechanically actuated via an electromechanical actuator (EMA) 130. It will be appreciated that while the illustration of FIGURE 1 shows only a single throttling valve 102 and single EMA 130 that multiple throttling valves may be used to control multiple cooling air tubes 128 providing air between the high-pressure compressor 116 and the high-pressure turbine 120 that are each controlled via a separate EMA 130. In one embodiment one to four EMAs 130 are integrated into the turbine air system 101. One EMA 130 may be integrated per turbine cooling air tube 128. As will be more fully described hereinbelow, and alternating arrangement of throttling valves is established such that throttling and fixed cooling lines alternate across the engine circumference to limit pressure distortion entering the high-pressure turbine 120.

The EMA 130 may be remotely mounted to the throttling valve 102. Rotary action from the EMA 130 controls the operation of the throttling valve 102 position. Direct drive or kinematic mechanisms may be integrated. An EMA slew rate of less than two seconds is assumed to be compatible with the turbine air system 101 operation. The EMA 130 may be actuated via a communications bus 132 that interconnects the EMA 130 with a motor controller 134. The motor controller 134 governs EMA 130 and throttling valve 102 position and are independently managed by the FADEC/EEC (full authority digital engine control/electronic engine controller) 142. This enables the FADEC/EEC 142 to dynamically reschedule throttling valve 102 position using open loop control. The use of EMAs 130 also may use independent control of each EMA to control the circumferential distribution of turbine cooling air at cruise and low-power modes. Multiple EMA controllers may be multiplexed from a single physical box.

The motor controller 134 may be connected to receive power from a hybrid electric generator 136 that provides electrical power to the motor controller and to the EMA 130 via power distribution bus 138. The power distribution bus 138 comprises a high voltage hybrid electric distribution bus with power availability throughout the full flight phase. The motor controller 134 additionally receives control signals over a data/communications cable 140 from the FADEC/EEC 142.

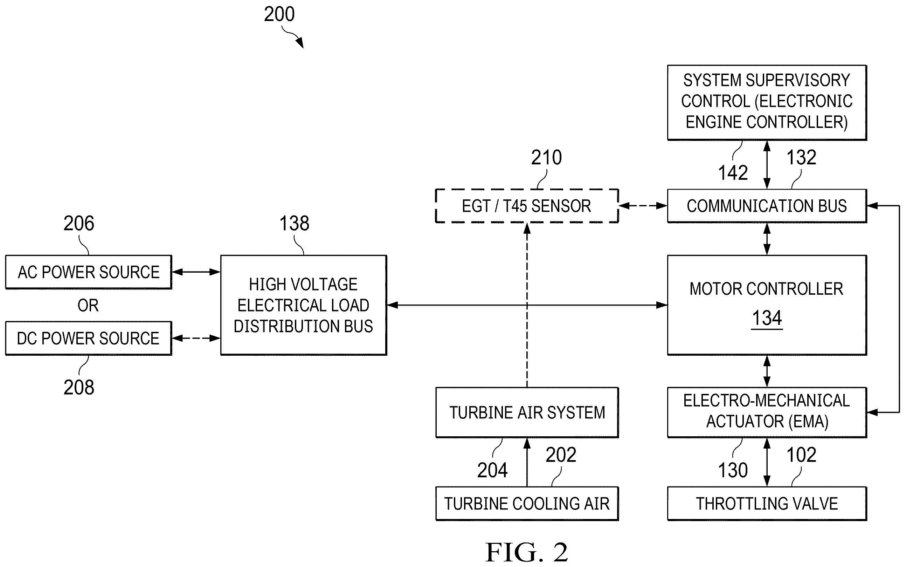

Referring now to FIGURE 2 there is illustrated a system block diagram of an example control system 200 for the turbine air system 101. The throttling valve 102 may be connected to receive control signals from the EMA 130. The throttling valve 102 additionally receives cooling turbine air 202 that is provided from the turbine air system 101. In this case, the turbine air system 101 will comprise cooling air provided from the high-pressure compressor 116 but may be provided from other locations as appropriate. The EMA 130 may be controlled by the motor controller 134 that causes the EMA 130 to open and close the throttling valve 102 as appropriate based upon the cooling needs of the hybrid electric gas turbine engine 100. The motor controller 134 receives control signals via a communications bus 132 from the FADEC/EEC 142 that provides system supervisory control. The motor controller 134 may control the throttling valve to a plurality of positions each providing a different flow level of the turbine cooling air through the cooling air tube 128. The motor controller 134 receives power for the controller and the EMA 130 via a high voltage electric load distribution bus 138. The distribution bus 138 would receive power from an AC power source 206 and/or a DC power source 208.

An EGT/T45 sensor 210 may also provide control signals to the engine control 142 to provide closed-loop control of the EMA 130. The sensor 210 would be connected to the communication bus 132 to provide sensor information to the motor controller 134 and would sense conditions within the turbine air system 101 in order to generate the sensor signals.

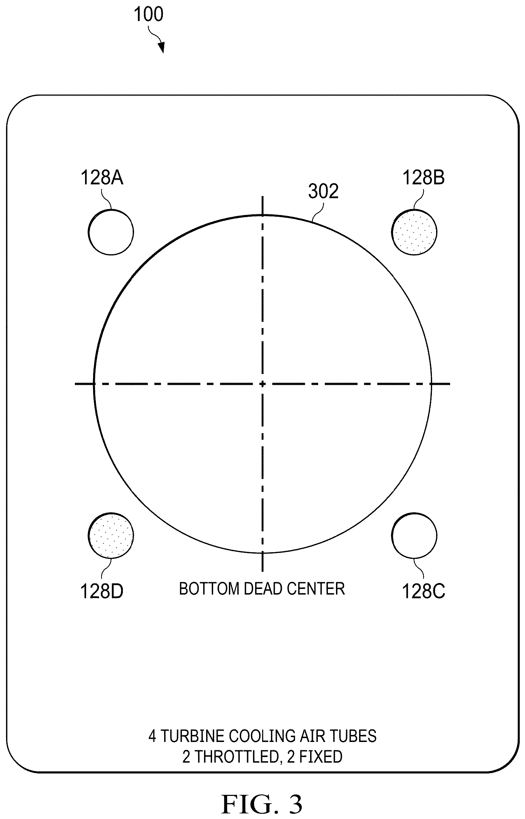

Referring now to FIGURE 3, there is illustrated a generalized cross-sectional view of a hybrid electric gas turbine engine 100. The embodiment of FIGURE 3 shows four cooling air tubes 128 surrounding the central core 302 of the hybrid electric gas turbine engine 100. In this embodiment, the cooling air tubes 128A and 128C comprise fixed cooling air tubes that do not have a throttling valve 102 associated therewith. Thus, cooling air may be continuously flowing from the high-pressure compressor 116 through the cooling air tubes 128A and 128C. Cooling air tubes 128B and 128D each have throttling valves 102 associated therewith that are controlled by an EMA 130. Thus, the amount of air passing through the cooling air tubes 128B and 128D can be altered by the motor controller 134 as desired by sending control signal to the EMA 130 controlling the throttling valve 102 associated with the cooling air tube 128. In this fashion, the amount of air flowing from the high-pressure compressor 116 to the high-pressure turbine 120 can be adjusted through cooling air tubes 128B and 128D.

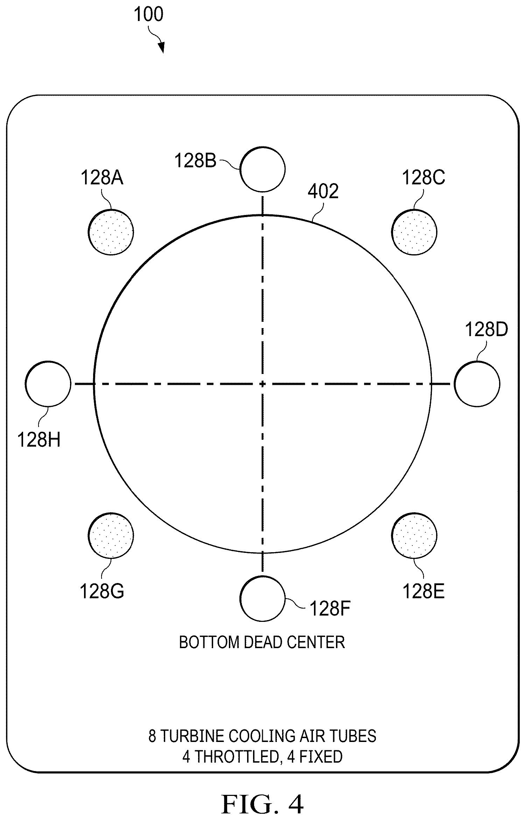

Referring now to FIGURE 4, there is illustrated a generalized cross-sectional view of a hybrid electric gas turbine engine 100. The embodiment of FIGURE 4 shows eight cooling air tubes 128 surrounding the central core 402 of the hybrid electric gas turbine engine 100. In this embodiment, the cooling air tubes 128B, 128D, 128F and 128H comprise fixed cooling air tubes that do not have a throttling valve 102 associated therewith. Thus, cooling air may be continuously flowing from the high-pressure compressor 116 through the cooling air tubes 128B, 128D, 128F and 128H. Cooling air tubes 128A, 128C, 128E and 128G each have throttling valves 102 associated therewith that are controlled by an EMA 130. Thus, the amount of air passing through the cooling air tubes 128A, 128C, 128E and 128G can be altered by the motor controller 134 as desired by sending control signals to the EMA 130 controlling the throttling valve 102 associated with each throttled cooling air tube 128 (e.g., 128A, 128C, 128E, and 128G). In this fashion, the amount of air flowing from the high-pressure compressor 116 to the high-pressure turbine 120 can be adjusted through cooling air tubes 128A, 128C, 128E and 128G.

While the illustrations of FIGURES 3 and 4 describe alternating throttled cooling air tubes 128 and fixed cooling air tubes 128, the particular configuration of fixed and throttled cooling air tubes may be established in any desired configuration in accordance with the cooling requirements of the engine. It should also be realized that the throttled cooling air tubes 128 need not be controlled as a single unitary operating group. Individual cooling air tubes 128 can be opened or closed as desired based upon the particular hybrid electric gas turbine engine 100 operation. For example, if a portion of the engine located near cooling air tube 128E was operating at a particularly high temperature, the throttling valve 102 associated with cooling air tube 128E could be opened to allow more cooling air to flow therethrough and be provided to the portion of the engine having the hotspot. This is equally applicable to any of the throttled cooling air tubes.

The EMA 130 actuated throttling valves 102 can provide a number of benefits within hybrid electric gas turbine engine 100 operation. The use of electromechanical actuation by the EMA 130 greatly improves reliability by using a high temperature actuator such as Switched Reluctance Machine (SRM) over classical high-temperature pneumatic actuation. This would enable hybrid electric engines with high-voltage electrical sources to enable reliable turbine cooling air modulation/throttling using the EMA 130 actuated throttling valve 102. Modulation of the turbine cooling air via the throttling valve 102 provides efficiency improvements allowing for fuel burn savings. The configuration is compatible with both nickel and CMC turbines. The motor controller 134 enables the EMA throttling valves 102 to be independently controlled. This enables circumferentially biased downstream pressure in order to reduce turbine case ovalization at cruise speeds.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" may include any of the following combinations: A, B, C, A and B, A and C, B and C, and A and B and C.

The description in the present invention should not be read as implying that any particular element, step, or function is an essential or critical element that must be included in the claim scope. The scope of patented subject matter is defined only by the allowed claims.

While this invention has described certain embodiments and generally associated methods, alterations and permutations of these embodiments and methods will be apparent to those skilled in the art. Accordingly, the above description of example embodiments does not define or constrain this invention. Other changes, substitutions, and alterations are also possible without departing from the scope of this invention, as defined by the following claims.

## Claims

1. A system for providing cooling air within a hybrid electric gas turbine engine (100), comprising:
at least one cooling air tube (128) configured to provide cooling air from a first location (112,116) in the hybrid electric gas turbine engine (100) to a second location (120) in the hybrid electric gas turbine engine (100);
at least one throttling valve (102) located on the at least one cooling air tube (128) and configured to limit a flow of the cooling air from the first location (112,116) to the second location (120), wherein the at least one throttling valve (102) is electromechanically actuated; and
at least one electromechanical actuator (130) associated with the at least one throttling valve (102) and configured to actuate the throttling valve (102) to a first flow level of the cooling air when the hybrid electric gas turbine engine (100) is in a first condition and to a second flow level of the cooling air when the hybrid electric gas turbine engine (100) is in a second condition responsive to control signals from an external source.

2. The system of claim 1, wherein the external source comprises a motor controller (134) for generating the control signals to control operation of the at least one throttling valve (102) to the first flow level and the second flow level of the cooling air responsive to a control signal from a full authority digital engine controller (FADEC) (142).

3. The system of claim 2, wherein each of the at least one electromechanical actuator (130) is separately controllable via the control signals from the motor controller (134).

4. The system of claim 2 or 3, wherein the control signals from the motor controller (134) control the at least one throttling valve (102) to a plurality of positions each providing a different flow level of the cooling air through the at least one cooling air tube (128).

5. The system of any preceding claim, further comprising a hybrid electric generator (136) configured to provide electricity to the electromechanical actuator (130).

6. The system of any preceding claim, further comprising at least one second cooling air tube (128F,128H), wherein the at least one second cooling air tube (128F,128H) provides a fixed flow of the cooling air therethrough.

7. The system of any preceding claim, further comprising a sensor (210) configured to detect operating conditions of a turbine cooling air system (101), wherein the turbine cooling air system (101) provides the flow of the cooling air and provides closed loop control of the at least one throttling valve (102) responsive to the detected operating conditions.

8. The system of any preceding claim, wherein the control signals are configured to limit the flow of the cooling air during cruise and low power modes of operation of the hybrid electric gas turbine engine (100).

9. The system of claim 1, wherein:
the first location is a high pressure compressor (112) and the second location is a high pressure turbine (120);
the at least one cooling air tube comprises a first cooling air tube (128); and
the system further comprises:
a second cooling air tube (128F,128H) configured to provide a fixed flow of the cooling air from the high pressure compressor (112) to the high pressure turbine (120); and
a motor controller (134) for generating the control signals to control operation of the electromechanical actuator (130) to actuate the throttling valve (102) to the first flow level and the second flow level of the cooling air responsive to a control signal from a full authority digital engine controller (FADEC) (142),
optionally wherein:
the control signals from the motor controller (134) control the throttling valve (102) to a plurality of positions each providing a different flow level of the cooling air through the first cooling air tube (128).

10. The system of claim 9 further comprising:
a third cooling air tube (128E,128G) configured to provide a second variable flow of cooling air from the high pressure compressor (112) in the hybrid electric gas turbine engine to the high pressure turbine (120) within the hybrid electric gas turbine engine;
a second throttling valve located on the third cooling air tube (128E,128G) and configured to control the second variable flow of the cooling air from the high pressure compressor (112) to the high pressure turbine (120), wherein the second throttling valve is electromechanically actuated; and
a second electromechanical actuator associated with the second throttling valve configured to actuate the second throttling valve to a third flow level when the hybrid electric gas turbine engine (100) is in the first condition and to the fourth flow level when the hybrid electric gas turbine engine (100) is in the second condition responsive to the control signals from the motor controller (134).

11. The system of claim 9 or 10 further comprising:
a hybrid electric generator (136) for providing electricity to the electromechanical actuator (130) and the motor controller (134); and/or
a sensor (210) for detecting operating conditions of the hybrid electric gas turbine engine (100), wherein the hybrid electric gas turbine engine (100) provides the flow of the cooling air and provides closed loop control of the throttling valve (102) responsive to the detected operating conditions.

12. The system of any of claims 9 to 11, wherein the control signals limit the flow of the cooling air through the cooling air tube or tubes, that is/are configured to provide a variable flow of cooling air, during cruise and low power modes of operation of the hybrid electric gas turbine engine (100).

13. A method for providing cooling air within a hybrid electric gas turbine engine (100), comprising:
providing cooling air from a first location (112,116) in the hybrid electric gas turbine engine (100) to a second location within the hybrid electric gas turbine engine (100) through at least one cooling air tube (128), the second location being associated with a high pressure turbine (120);
limiting a flow of the cooling air from the first location (112,116) in the hybrid electric gas turbine engine (100) to the second location within the hybrid electric gas turbine engine (100) to a first flow level when the hybrid electric gas turbine engine (100) is in a first condition and to a second flow level when the hybrid electric gas turbine engine (100) is in a second condition using at least one electromechanically actuated throttling valve (102) associated with the at least one cooling air tube (128); and
actuating the at least one throttling valve (102) using at least one electromechanical actuator (130) responsive to control signals from an external source,
optionally wherein the method further comprises:
providing electricity to the electromechanical actuator (130) using a hybrid electric generator (136);
providing a fixed cooling air flow between the first location (112,116) and the second location using at least one second cooling air tube (128F,128H).

14. The method of claim 13 further comprising generating the control signals to control operation of the at least one throttling valve (102) to limit the flow of the cooling air using a motor controller (134) responsive to a control signal from a full authority digital engine controller (FADEC),
optionally wherein the step of actuating further comprises separately controlling each of the at least one electromechanical actuator (130) via the control signals from the motor controller (130).

15. The method of claim 13 or 14, wherein the step of limiting further comprises controlling the at least one throttling valve (102) to a plurality of positions each having a different flow level of the cooling air through the at least one cooling air tube (128).
